# EUROPEAN PATENT APPLICATION

(11) **EP 4 086 569 A1**
(43) Date of publication of application: **09.11.2022**
(21) Application number: 20908569.5
(22) Date of filing: 15.09.2020
(51) Int. Cl.: G01B 11/25, A47L 1/02, A47L 11/24

(54) **STRUCTURED LIGHT MODULE AND AUTONOMOUS MOVING APPARATUS**

(30) Priority: 30.12.2019 CN 201911403768
(71) Applicant: Ecovacs Robotics Co., Ltd., Wuzhong District Suzhou, Jiangsu 215168 (CN)
(72) Inventor: WU, Xianyong, Suzhou, Jiangsu 215168 (CN); CHEN, Wei, Suzhou, Jiangsu 215168 (CN); LUO, Xiao, Suzhou, Jiangsu 215168 (CN)
(74) Representative: Viering, Jentschura & Partner mbB Patent- und Rechtsanwälte
(86) International application number: PCT/CN2020/115370
(87) International publication number: WO 2021/135392

(57) **Abstract**

Provided are a structured light module and an autonomous mobile device. A structured light module (100) comprises a camera module (101) and line laser emitters (102) distributed on two sides of the camera module (101); the line laser emitters (102) emit line laser outwards; and the camera module (101) collects an environmental image detected by the line laser. By virtue of the advantage of high detection accuracy of the line laser, front environmental information may be detected more accurately. In addition, the line laser emitters (102) are located on two sides of the camera module (101). This mode occupies a small size, may save more space, and is beneficial to expand an application scenario of a line laser sensor.

## Description

### CROSS-REFERENCE TO RELATED APPLICATIONS

The present disclosure makes reference to Chinese Patent Application No. 2019114037682, entitled "Structured Light Module and Autonomous Mobile Device", filed on December 30, 2019, which is incorporated herein by reference in its entirety.

### FIELD

The present disclosure relates to the technical field of artificial intelligence, and in particular, to a structured light module and an autonomous mobile device.

### BACKGROUND

With the popularization of laser technology, the application of laser sensors is gradually excavated. Obstacle recognition and obstacle avoidance are important application directions of laser sensors. Laser sensors are highly required in various fields. Existing laser sensors have been unable to meet the application requirements of users, and new laser sensor structures need to be proposed.

### SUMMARY

Multiple aspects of the present disclosure provide a structured light module and an autonomous mobile device, so as to provide a new structured light module and expand the application range of a laser sensor.

An embodiment of the present disclosure provides a structured light module, including: a camera module and line laser emitters distributed on two sides of the camera module. The line laser emitters are responsible for emitting line laser outwards. The camera module is responsible for collecting an environmental image detected by the line laser.

An embodiment of the present disclosure also provides an autonomous mobile device, including: a device body. The device body is provided with a first control unit, a second control unit, and a structured light module including: a camera module and line laser emitters distributed on two sides of the camera module. The first control unit is electrically connected to the line laser emitters, and the second control unit is electrically connected to the camera module. The first control unit controls the line laser emitters to emit line laser outwards. The second control unit controls the camera module to collect an environmental image detected by the line laser, and is responsible for performing functional control on the autonomous mobile device according to the environmental image.

An embodiment of the present disclosure also provides an autonomous mobile device, including: a device body. The device body is provided with a main controller, and a structured light module including: a camera module and line laser emitters distributed on two sides of the camera module. The main controller controls the line laser emitters to emit line laser outwards, controls the camera module to collect an environmental image detected by the line laser, and is responsible for performing functional control on the autonomous mobile device according to the environmental image.

In the embodiments of the present disclosure, a camera module is combined with line laser emitters, and the line laser emitters are arranged on two sides of the camera module to obtain a new structured light module. In the structured light module, the line laser emitters emit line laser outwards, and the camera module collects an environmental image detected by the line laser. By virtue of the advantage of high detection accuracy of the line laser, front environmental information may be detected more accurately. In addition, the line laser emitters are located on two sides of the camera module. This mode occupies a small size, may save more space, and is beneficial to expand an application scenario of a line laser sensor.

### BRIEF DESCRIPTION OF THE DRAWINGS

The accompanying drawings described herein are used to provide a further understanding of the present disclosure, and constitute a part of the present disclosure. Exemplary embodiments of the present disclosure and the description thereof are used to explain the present disclosure, but do not constitute improper limitations to the present disclosure. In the drawings:
FIG. 1a is a schematic structural diagram of a structured light module according to an exemplary embodiment of the present disclosure;
FIG. 1b is a schematic diagram of a working principle of a line laser emitter according to an exemplary embodiment of the present disclosure;
FIG. 1c is a schematic structural diagram of a relationship between installation positions of various devices in a structured light module according to an exemplary embodiment of the present disclosure;
FIG. 1d is a schematic diagram of a relationship between line laser of a line laser emitter and a field angle of a camera module according to an exemplary embodiment of the present disclosure;
FIG. 1e is a front view of a structured light module according to an exemplary embodiment of the present disclosure;
FIG. If is a top view of a structured light module according to an exemplary embodiment of the present disclosure;
FIG. 1g is a rear view of a structured light module according to an exemplary embodiment of the present disclosure;
FIG. 1h is a side view of a structured light module according to an exemplary embodiment of the present disclosure;
FIG. 1i is an exploded view of a structured light module according to an exemplary embodiment of the present disclosure;
FIG. 2a is a schematic structural diagram of another structured light module according to an exemplary embodiment of the present disclosure;
FIG. 2b is a schematic structural diagram of a laser drive circuit according to an exemplary embodiment of the present disclosure;
FIG. 3a is a schematic structural diagram of an autonomous mobile device according to an exemplary embodiment of the present disclosure;
FIG. 3b is a schematic structural diagram of a first control unit and a second control unit according to an exemplary embodiment of the present disclosure;
FIG. 3c is an exploded view of a device body and a striking plate according to an exemplary embodiment of the present disclosure;
FIG. 3d is an exploded view of a structured light module and a striking plate according to an exemplary embodiment of the present disclosure;
FIG. 3e is a schematic structural diagram of an autonomous mobile device controlling a structured light module according to an exemplary embodiment of the present disclosure;
FIG. 4a is a schematic structural diagram of another autonomous mobile device according to an exemplary embodiment of the present disclosure;
FIG. 4b is a schematic structural diagram of a main controller of an autonomous mobile device according to an exemplary embodiment of the present disclosure; and
FIG. 4c is a schematic structural diagram of another autonomous mobile device controlling a structured light module according to an exemplary embodiment of the present disclosure.

### DETAILED DESCRIPTION OF EXAMPLE EMBODIMENTS

For the purpose of clarifying the objects, technical solutions and advantages of the present disclosure, the technical solutions of the present disclosure will be clearly and completely described below in connection with specific embodiments of the present disclosure and the accompanying drawings. It is obvious that the described embodiments are only a part of the embodiments of the present disclosure, rather than all the embodiments. All other embodiments obtained by those of ordinary skill in the art based on the embodiments in the present disclosure without involving creative efforts fall within the scope of protection of the present disclosure.

With regard to the problem that existing laser sensors cannot meet application requirements, an embodiment of the present disclosure provides a structured light module. The structured light module mainly includes line laser emitters and a camera module. The line laser emitters are distributed on two sides of the camera module, and may emit line laser outwards. After the line laser reaches the surface and background of an object, the camera module collects returned line laser information, and then may calculate information such as the position and depth of the object according to the change of the line laser information caused by the object, so as to recover the whole three-dimensional space. The structured light module provided by the embodiments of the present disclosure may be implemented in various forms, and will be described respectively by different embodiments.

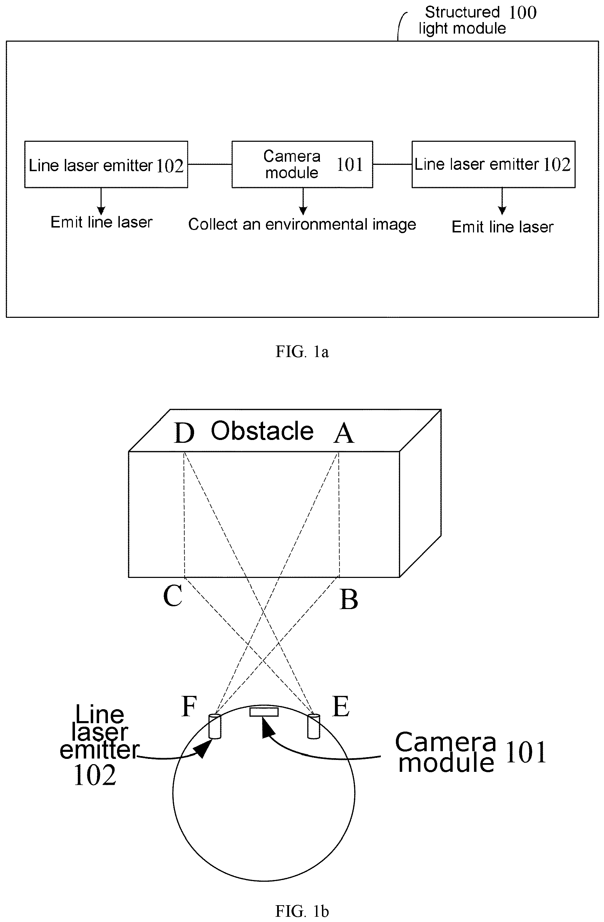

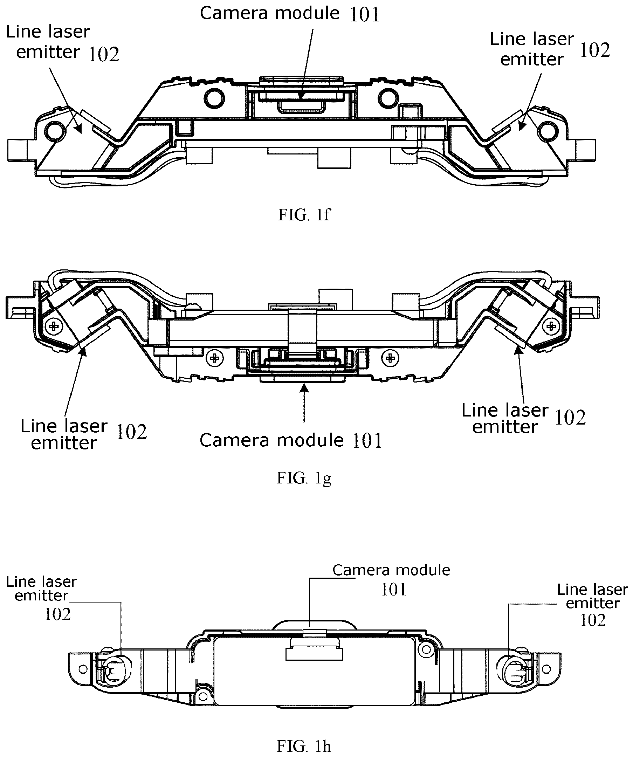

FIG. 1a is a schematic structural diagram of a structured light module according to an exemplary embodiment of the present disclosure. As shown in FIG. 1a, the structured light module 100 includes a camera module 101 and line laser emitters 102 distributed on two sides of the camera module 101. The line laser emitters 102 are responsible for emitting line laser outwards. The camera module 101 is responsible for collecting an environmental image detected by the line laser.

In the present embodiment, an implementation form of the line laser emitters 102 is not limited, and may be any device/product form capable of emitting line laser. For example, the line laser emitters 102 may be, but are not limited to, laser tubes. The line laser emitters 102 may emit line laser outwards to detect an environmental image. As shown in FIG. 1b, the line laser emitters 102 emit a laser plane FAB and a laser plane ECD outwards. After the laser planes reach an obstacle, a beam of line laser is formed on the surface of the obstacle, i.e., a line segment AB and a line segment CD shown in FIG. 1b. Optionally+, the line laser emitters 102 may emit line laser outwards under the control of a control unit or main controller of a device where the structured light module 100 is located.

In the present embodiment, an implementation form of the camera module 101 is not limited. Any visual device capable of collecting an environmental image is applicable to the embodiments of the present disclosure. For example, the camera module 101 may include, but is not limited to, a monocular camera, a binocular camera, etc. In addition, in the present embodiment, a wavelength of the line laser emitted by the line laser emitters 102 is not limited, and the color of the line laser may be different depending on the wavelength, e.g. red laser, violet laser, etc. Accordingly, the camera module 101 may employ a camera module capable of collecting the line laser emitted by the line laser emitters 102. The camera module 101 may also be an infrared camera, an ultraviolet camera, a starlight camera, a high-definition camera, etc. for example, adapted to the wavelength of the line laser emitted by the line laser emitters 102. The camera module 101 may collect an environmental image within a field angle thereof. The field angle of the camera module 101 includes a vertical field angle and a horizontal field angle. In the present embodiment, the field angle of the camera module 101 is not limited, and the camera module 101 having an appropriate field angle may be selected according to application requirements.

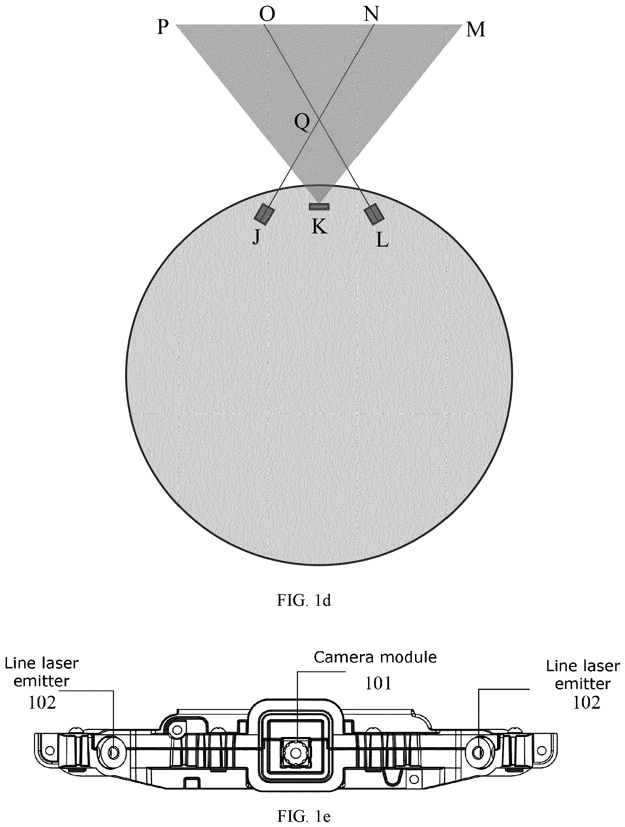

In the present embodiment, the line laser emitted by the line laser emitters 102 is located within the field range of the camera module 101, the line laser may help to detect information such as the contour, height and/or width of an object within the field angle of the camera module 101, and the camera module 101 may collect an environmental image detected by the line laser. In the present embodiment, as long as the line laser emitted by the line laser emitters 102 is located within the field range of the camera module 101, an angle between a laser line segment formed by the line laser on the surface of the object and a horizontal plane is not limited. For example, the line laser may be parallel or perpendicular to the horizontal plane, and may also form any angle with the horizontal plane, which may be specifically determined according to application requirements. The angle between the line laser and the horizontal plane is related to factors such as an installation mode and an installation angle of the line laser emitters 102. FIG. 1d shows a schematic diagram of a relationship between the line laser emitted by the line laser emitters 102 and the field angle of the camera module 101. Letter K represents a camera module, and letters J and L represent line laser emitters located on two sides of the camera module. Q represents an intersection point of line laser emitted by the line laser emitters on two sides within a field angle of the camera module. Straight lines KP and KM represent two boundaries of a horizontal field of the camera module, and ∠PKM represents a horizontal field angle of the camera module. In FIG. Id, a straight line JN represents a center line of line laser emitted by a line laser emitter J, and a straight line LQ represents a center line of line laser emitted by a line laser emitter L.

Based on the environmental image collected by the camera module 101, a distance from the structured light module 100 or a device where the structured light module 100 is located to a front object (such as an obstacle) may be calculated, and information such as the height, width, shape, or contour of the front object (such as the obstacle) may also be calculated. Furthermore, three-dimensional reconstruction may also be performed, etc. A distance between the line laser emitters and an object in front thereof may be calculated by a trigonometric function using a trigonometric principle.

In the embodiments of the present disclosure, the total number of line laser emitters 102 is not limited, and may be two or more, for example. The number of line laser emitters 102 distributed on each side of the camera module 101 is also not limited, and the number of line laser emitters 102 on each side of the camera module 101 may be one or more. In addition, the number of line laser emitters 102 on two sides may be the same or different. FIG. 1a illustrates, but is not limited to, arrangement of one line laser emitter 102 on each side of the camera module 101. For example, two line laser emitters 102 may be arranged on a left side of the camera module 101, and one line laser emitter 102 may be arranged on a right side of the camera module 101. For another example, two, three, or five line laser emitters 102 are arranged on the left and right sides of the camera module 101.

In the present embodiment, the distribution pattern of the line laser emitters 102 on two sides of the camera module 101 is not limited, and the line laser emitters may be, for example, uniformly distributed, non-uniformly distributed, symmetrically distributed, or asymmetrically distributed. The uniform distribution and the non-uniform distribution may mean that the line laser emitters 102 distributed on the same side of the camera module 101 may be uniformly distributed or non-uniformly distributed. Certainly, it can also be understood that the line laser emitters 102 distributed on two sides of the camera module 101 are uniformly distributed or non-uniformly distributed as a whole. The symmetric distribution and the asymmetric distribution mainly mean that the line laser emitters 102 distributed on two sides of the camera module 101 are symmetrically distributed or asymmetrically distributed as a whole. The symmetry herein includes both equivalence in number and symmetry in installation position. For example, in the structured light module shown in FIG. 1b, the number of line laser emitters 102 is two, and the two line laser emitters 102 are symmetrically distributed on two sides of the camera module 101.

In the embodiments of the present disclosure, an installation position relationship between the line laser emitters 102 and the camera module 101 is also not limited, and any installation position relationship in which the line laser emitters 102 are distributed on two sides of the camera module 101 is applicable to the embodiments of the present disclosure. The installation position relationship between the line laser emitters 102 and the camera module 101 is related to an application scenario of the structured light module 100. The installation position relationship between the line laser emitters 102 and the camera module 101 may be flexibly determined according to the application scenario of the structured light module 100. The installation position relationship here includes the following aspects:
Installation Height: The line laser emitters 102 and the camera module 101 may be located at different heights in terms of the installation height. For example, the line laser emitters 102 on two sides are higher than the camera module 101, or the camera module 101 is higher than the line laser emitters 102 on two sides. Alternatively, the line laser emitter 102 on one side is higher than the camera module 101, and the line laser emitter 102 on the other side is lower than the camera module 101. Certainly, the line laser emitters 102 and the camera module 101 may be located at the same height.

More preferably, the line laser emitters 102 and the camera module 101 may be located at the same height. For example, in actual use, the structured light module 100 will be installed on a device (e.g. an autonomous mobile device such as a robot, a purifier, and an unmanned vehicle). In this case, the distance from the line laser emitters 102 and the camera module 101 to a working surface (e.g. the ground) on which the device is located is the same, e.g. 47 mm, 50 mm, 10 cm, 30 cm, or 50 cm, etc.

Installation Distance: The installation distance refers to a mechanical distance (otherwise referred to as a baseline distance) between the line laser emitters 102 and the camera module 101. The mechanical distance between the line laser emitters 102 and the camera module 101 may be flexibly set according to application requirements of the structured light module 100. Information such as the mechanical distance between the line laser emitters 102 and the camera module 101, a detection distance required to be satisfied by a device (such as a robot) where the structured light module 100 is located, and the diameter of the device may determine the size of a measurement blind zone to a certain extent. The diameter of the device (such as the robot) where the structured light module 100 is located is fixed, and the measurement range and the mechanical distance between the line laser emitters 102 and the camera module 101 may be flexibly set as required, which means that the mechanical distance and the blind zone range are not fixed values. On the premise of ensuring the measurement range (or performance) of the device, the blind zone range should be reduced as far as possible. However, as the mechanical distance between the line laser emitters 102 and the camera module 101 is larger, a controllable distance range is larger, which is beneficial to better control the size of the blind zone.

In some application scenarios, the structured light module 100 is applied to a floor sweeping robot, and may be, for example, installed on a striking plate or robot body of the floor sweeping robot. For the floor sweeping robot, a reasonable mechanical distance range between the line laser emitters 102 and the camera module 101 is exemplarily given below. For example, the mechanical distance between the line laser emitters 102 and the camera module 101 may be greater than 20 mm. Further optionally, the mechanical distance between the line laser emitters 102 and the camera module 101 is greater than 30 mm. Furthermore, the mechanical distance between the line laser emitters 102 and the camera module 101 is greater than 41 mm. It is to be noted that the range of the mechanical distance given here is not only applicable to a scenario in which the structured light module 100 is applied to a floor sweeping robot, but also to applications in which the structured light module 100 is applied to other devices that are closer or similar in size to the floor sweeping robot.

Emission Angle: The emission angle refers to an angle between a center line of line laser emitted by the line laser emitters 102 and an installation baseline of the line laser emitters 102 after being installed. The installation baseline refers to a straight line where the line laser module 102 and the camera module 101 are located under the condition that the line laser module 102 and the camera module 101 are located at the same installation height. In the present embodiment, the emission angle of the line laser emitters 102 is not limited. The emission angle is related to a detection distance required to be satisfied by a device (such as a robot) where the structured light module 100 is located, the radius of the device, and the mechanical distance between the line laser emitters 102 and the camera module 101. The emission angle of the line laser emitters 102 may be directly obtained through a trigonometric function relationship, i.e. the emission angle is a fixed value under the condition that the detection distance required to be satisfied by the device (such as the robot) where the structured light module 100 is located, the radius of the device, and the mechanical distance between the line laser emitters 102 and the camera module 101 are determined.

Certainly, if a certain emission angle is required, it may be achieved by adjusting the detection distance required to be satisfied by the device (such as the robot) where the structured light module 100 is located, and the mechanical distance between the line laser emitters 102 and the camera module 101. In some application scenarios, the emission angle of the line laser emitters 102 may be varied over a range of angles, for example, but not limited to, 50-60 degrees, by adjusting the mechanical distance between the line laser emitters 102 and the camera module 101 under the condition that the detection distance required to be satisfied by the device (such as the robot) where the structured light module 100 is located, and the radius of the device are determined.

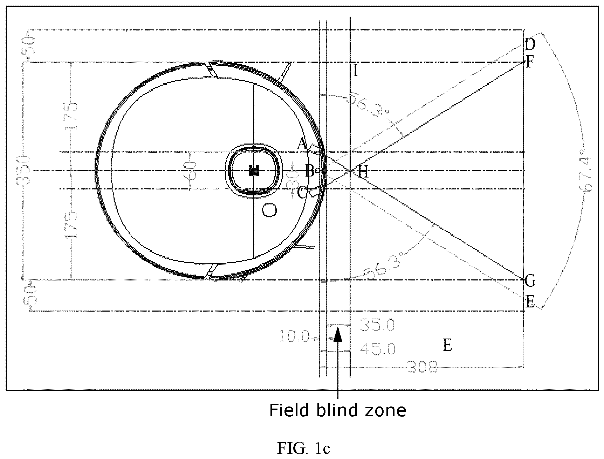

With reference to FIG. 1c, taking the application of the structured light module 100 on the floor sweeping robot as an example, the above-mentioned several installation position relationships and relevant parameters are exemplarily illustrated. In FIG. 1c, letter B represents a camera module, and letters A and C represent line laser emitters located on two sides of the camera module. H represents an intersection point of line laser emitted by the line laser emitters on two sides within a field angle of the camera module. Straight lines BD and BE represent two boundaries of a horizontal field of the camera module, and ∠DBE represents a horizontal field angle of the camera module. In FIG. 1c, a straight line AG represents a center line of line laser emitted by a line laser emitter A, and a straight line CF represents a center line of line laser emitted by a line laser emitter C. In addition, in FIG. 1c, a straight line BH represents a center line of the field angle of the camera module. That is, in FIG. 1c, the center line of the line laser emitted by the line laser emitters on two sides intersects with the center line of the field angle of the camera module.

In the embodiments of the present disclosure, a horizontal field angle and a vertical field angle of the camera module used are not limited. Optionally, the camera module may have a horizontal field angle in the range of 60-75 degrees. Further, the horizontal field angle of the camera module may be 69.49 degrees, 67.4 degrees, etc. Accordingly, the camera module may have a vertical field angle in the range of 60-100 degrees. Further, the vertical field angle of the camera module may be 77.74 degrees, 80 degrees, etc.

In FIG. 1c, the radius of the floor sweeping robot is 175 mm and the diameter is 350 mm. Line laser emitters A and C are symmetrically distributed on two sides of a camera module B, and a mechanical distance between the line laser emitter A or C and the camera module B is 30 mm. A horizontal field angle ∠DBE of the camera module B is 67.4 degrees. Under the condition that a detection distance of the floor sweeping robot is 308 mm, an emission angle of the line laser emitter A or C is 56.3 degrees. As shown in FIG. 1c, a distance between a straight line IH passing through a point H and an installation baseline is 45 mm, a distance between the straight line IH and a tangent line at an edge of the floor sweeping robot is 35 mm, and this region is a field blind zone. The various values shown in FIG. 1c are merely illustrative and are not limiting.

For convenience of use, the structured light module 100 provided by the embodiments of the present disclosure includes, in addition to the camera module 101 and the line laser emitters 102 distributed on two sides of the camera module 101, some bearing structures for bearing the camera module 101 and the line laser emitters 102. The bearing structure may take a variety of implementation forms and is not intended to be limiting. In some optional embodiments, the bearing structure includes a fixing seat, and may further include a fixing cover that cooperates with the fixing seat. The structure of the structured light module 100 with the fixing seat and the fixing cover will be described with reference to FIGs. 1e-1i. FIGs. 1e-1i are a front view, a bottom view, a top view, a rear view, and an exploded view of the structured light module 100, respectively. Each view does not show all components due to a view angle, so that only a part of the components is marked in FIGs. 1e-1i. As shown in FIGs. 1e-1i, the structured light module 100 further includes a fixing seat 104. The camera module 101 and the line laser emitters 102 are assembled on the fixing seat 104.

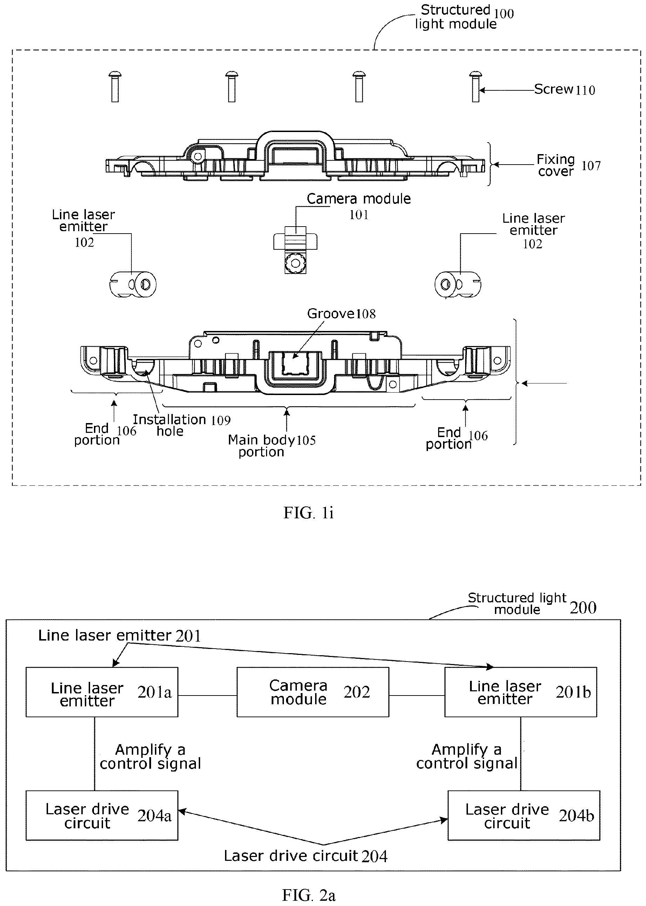

Further optionally, as shown in FIG. 1i, the fixing seat 104 includes a main body portion 105 and end portions 106 located on two sides of the main body portion 105. The camera module 101 is assembled on the main body portion 105, and the line laser emitters 102 are assembled on the end portions 106. End surfaces of the end portions 106 are oriented to a reference plane so that center lines of the line laser emitters 102 intersect with a center line of the camera module 101 at a point. The reference plane is a plane perpendicular to an end surface or end surface tangent line of the main body portion 105.

In an optional embodiment, in order to facilitate fixing and reduce the influence of the device on the appearance of the structured light module 100, as shown in FIG. 1i, a groove 108 is provided in a middle position of the main body portion 105, and the camera module 101 is installed in the groove 108. Installation holes 109 are provided in the end portions 106, and the line laser emitters 102 are installed in the installation holes 109. Further optionally, as shown in FIG. 1i, the structured light module 100 is also equipped with a fixing cover 107 assembled over the fixing seat 104. A cavity is formed between the fixing cover 107 and the fixing seat 104 to accommodate connecting lines of the camera module 101 and the line laser emitters 102. The fixing cover 107 and the fixing seat 104 may be fixed by a fixing member. In FIG. 1i, the fixing member is illustrated with a screw 110, but the fixing member is not limited to one implementation of a screw.

In an optional embodiment, a lens of the camera module 101 is located within an outer edge of the groove 108, i.e. the lens is recessed within the groove 108, thereby preventing the lens from being scratched or bumped, and advantageously protecting the lens.

In the embodiments of the present disclosure, the shape of an end surface of the main body portion 105 is not limited, and the end surface may be, for example, a flat surface or a curved surface recessed inwards or outwards. The shape of the end surface of the main body portion 105 is different depending on different devices where the structured light module 100 is located. For example, assuming that the structured light module 100 is applied to an autonomous mobile device having a circular or elliptical contour, the end surface of the main body portion 105 may be implemented as an inwardly recessed curved surface adapted to the contour of the autonomous mobile device. If the structured light module 100 is applied to an autonomous mobile device having a square or rectangular contour, the end surface of the main body portion 105 may be implemented as a plane adapted to the contour of the autonomous mobile device. The autonomous mobile device having a circular or elliptical contour may be a floor sweeping robot, a window cleaning robot, etc. having a circular or elliptical contour. Accordingly, the autonomous mobile device having a square or rectangular contour may be a floor sweeping robot, a window cleaning robot, etc. having a square or rectangular contour.

In an optional embodiment, for an autonomous mobile device having a circular or elliptical contour, the structured light module 100 is installed on the autonomous mobile device so that the radius of the curved surface of the main body portion 105 is the same or approximately the same as the radius of the autonomous mobile device in order to more closely match the appearance of the autonomous mobile device and maximally utilize the space of the autonomous mobile device. For example, if an autonomous mobile device having a circular contour has a radius in the range of 170 mm, when the structured light module is applied to the autonomous mobile device, the radius of the curved surface of the main body portion may be 170 mm or approximately 170 mm, for example, but not limited to, in the range of 170 mm to 172 mm.

Further, under the condition that the structured light module is applied to an autonomous mobile device having a circular or elliptical contour, the emission angle of the line laser emitters in the structured light module is mainly determined by the detection distance required to be satisfied by the autonomous mobile device and the radius of the autonomous mobile device, etc. In this scenario, the end surface or end surface tangent line of the main body portion of the structured light module is parallel to the installation baseline, and therefore the emission angle of the line laser emitters may also be defined as an angle between the center line of the line laser emitted by the line laser emitters and the end surface or end surface tangent line of the main body portion. In some application scenarios, the range of the emission angle of the line laser emitters may be implemented as, but not limited to, 50-60 degrees under the condition that the detection distance and radius of the autonomous mobile device are determined. As shown in FIGs. 1e-1i, the number of line laser emitters 102 is two, and the two line laser emitters 102 are symmetrically distributed on two sides of the camera module 101. The detection distance required to be satisfied by the autonomous mobile device refers to the distance range that the autonomous mobile device needs to detect environmental information, mainly referring to a certain distance range in front of the autonomous mobile device.

The structured light module provided in the above-described embodiments of the present disclosure has a stable structure and a small size, fits the appearance of the whole machine, greatly saves space, and may support various types of autonomous mobile devices.

In addition to the above-described structured light module, an embodiment of the present disclosure also provides another structured light module. FIG. 2a is a schematic structural diagram of another structured light module according to an exemplary embodiment of the present disclosure. The structured light module 200 includes at least two line laser emitters 201 and a camera module 202. The at least two line laser emitters 201 are distributed on two sides of the camera module 202.

Further, as shown in FIG. 2a, the structured light module 200 also includes a laser drive circuit 204. The laser drive circuit 204 is electrically connected to the line laser emitters 201. In the embodiments of the present disclosure, the number of laser drive circuits 204 is not limited. Different laser emitters 201 may share one laser drive circuit 204, or one line laser emitter 201 may correspond to one laser drive circuit 204. More preferably, one line laser emitter 201 corresponds to one laser drive circuit 204. FIG. 2a illustrates correspondence of one line laser emitter 201 to one laser drive circuit 204. As shown in FIG. 2a, the structured light module 200 includes two line laser emitters 201, respectively represented by 201a and 201b, and laser drive circuits 204 corresponding to the two line laser emitters 201, respectively represented by 204a and 204b.

In some application scenarios, the structured light module 200 may be applied to an autonomous mobile device including a main controller or a control unit through which the autonomous mobile device may control the structured light module 200 to work. In the present embodiment, the laser drive circuit 204 is mainly used for amplifying a control signal sent from the main controller or the control unit to the line laser emitter 201 and providing the amplified control signal to the line laser emitter 201 to control the line laser emitter 201. In the embodiments of the present disclosure, a circuit structure of the laser drive circuit 204 is not limited, and any circuit structure capable of amplifying a signal and sending the amplified signal to the line laser emitter 201 is applicable to the embodiments of the present disclosure.

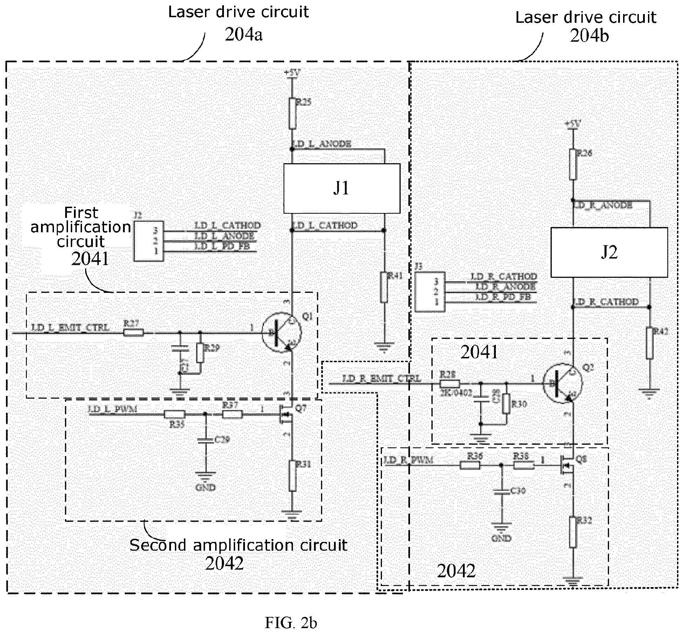

In an optional embodiment, as shown in FIG. 2b, a circuit structure of the laser drive circuit 204 (e.g. 204a or 204b) includes a first amplification circuit 2041 and a second amplification circuit 2042. The first amplification circuit 2041 is electrically connected to the main controller or the control unit of the autonomous mobile device, and an on-off control signal sent by the main controller or the control unit to the line laser emitter 201 enters the line laser emitter 201 after being amplified by the first amplification circuit 2041 so as to drive the line laser emitter 201 to start working. The second amplification circuit 204b is also electrically connected to the main controller or the control unit of the autonomous mobile device, and a current control signal sent by the main controller or the control unit to the line laser emitter 201 enters the line laser emitter 201 after being amplified by the first amplification circuit 2041 so as to control a working current of the line laser emitter 201.

Further, as shown in FIG. 2b, the first amplification circuit 2041 includes a triode Q1. A base of the triode Q1 is connected to a resistor R27, the resistor R27 and the base are grounded via a capacitor C27, and two ends of the capacitor C27 are connected in parallel to a resistor R29. The other end of the resistor R27 is electrically connected to a first IO interface of the main controller or the control unit as an input end of the first amplification circuit. The on-off control signal output by the first IO interface of the main controller is filtered by the capacitor C27 and amplified by the triode Q1, and then the line laser emitter 201 is driven to start working. The main controller or the control unit includes at least two first IO interfaces, and each first IO interface is electrically connected to one laser drive circuit 204 for outputting an on-off control signal to the laser drive circuit 204 (such as 204a or 204b). In FIG. 2b, an on-off control signal output by the main controller or the control unit to the laser drive circuit 204a via the first IO interface is represented by LD_L_EMIT_CTRL, and an on-off control signal output to the laser drive circuit 204b is represented by LD_R_EMIT_CTRL.

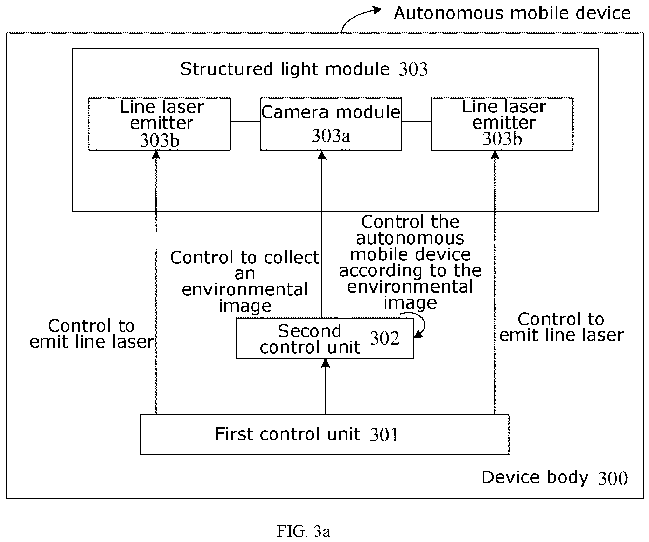

Further, as shown in FIG. 2b, the second amplification circuit 2042 includes an MOS tube Q7. A gate of the MOS tube Q7 is connected to a resistor R37 and a resistor R35. The resistor R37 and the resistor R35 are grounded via a capacitor C29. The other end of the resistor R35 is electrically connected to a second IO interface of the main controller as an input end of the second amplification circuit. A drain of the MOS tube Q7 is grounded via a resistor R31, and a source of the MOS tube Q7 is electrically connected to an emitter of the triode Q1. An output end of the laser drive circuit between a collector of the triode Q1 and a power supply of the laser drive circuit is used for connecting the line laser emitters. The second IO interface of the main controller or the control unit outputs a pulse width modulation (PWM) signal which is filtered by a filter circuit composed of the resistor R35 and the capacitor C29, and then the working current of the laser emitter may be controlled by changing a gate voltage of the MOS tube Q7. The main controller or the control unit includes at least two second IO interfaces, and each second IO interface is electrically connected to one laser drive circuit 204 for outputting a PWM signal to the laser drive circuit 204 (such as 204a or 204b). In FIG. 2b, a PWM signal output by the main controller or the control unit to the laser drive circuit 204a via the second IO interface is represented by LD L PWM, and a PWM signal output to the laser drive circuit 204b is represented by LD_R_PWM. Further, as shown in FIG. 2b, J1 represents a control interface of the line laser emitter 201a, J2 represents a control interface of the line laser emitter 201b, and a pin connection relationship between J1 and J2 and the laser drive circuits 204a and 204b is shown in FIG. 2b. That is, pins LD_L_CATHOD (cathode) and LD_L_ANODE (anode) of J1 are connected to corresponding pins in the laser drive circuit 204a respectively, and pins LD_R_CATHOD (cathode) and LD_R_ANODE (anode) of J2 are connected to corresponding pins in the laser drive circuit 204b respectively. Pin names, pin numbers and connection relationships between corresponding pin numbers shown in FIG. 2b are merely exemplary and should not be construed as limiting the circuit structure of the present disclosure. Based on the above-described structured light module, an embodiment of the present disclosure also provides a schematic structural diagram of an autonomous mobile device. As shown in FIG. 3a, the autonomous mobile device includes a device body 300. The device body 300 is provided with a first control unit 301, a second control unit 302 and a structured light module 303. The structured light module 303 includes a camera module 303a and line laser emitters 303b distributed on two sides of the camera module 303a. The detailed description of the structured light module 303 may be seen in the foregoing embodiments and will not be described in detail herein.

In the embodiments of the present disclosure, the autonomous mobile device may be any mechanical device capable of performing highly autonomous space movement in an environment where it is located, such as a robot, a purifier, and an unmanned aerial vehicle. The robot may include a floor sweeping robot, a glass cleaning robot, a home accompanying robot, a guest greeting robot, etc.

Certainly, the shape of the autonomous mobile device may vary depending on different implementation forms of the autonomous mobile device. The present embodiment does not limit the implementation form of the autonomous mobile device. Taking an outer contour shape of the autonomous mobile device as an example, the outer contour shape of the autonomous mobile device may be an irregular shape or some regular shapes. For example, the outer contour shape of the autonomous mobile device may be a regular shape such as a circle, an ellipse, a square, a triangle, a drop shape, or a D shape. Shapes other than a regular shape are called irregular shapes. For example, the outer contour of a humanoid robot, the outer contour of an unmanned vehicle and the outer contour of an unmanned aerial vehicle belong to the irregular shapes.

In the embodiments of the present disclosure, the first control unit 301 and the second control unit 302 are electrically connected to the structured light module 303, and may control the structured light module 303 to work. Specifically, the first control unit 301 is electrically connected to the line laser emitter 303b, and the first control unit 301 controls the line laser emitter 303b to emit line laser outwards. For example, the time, emission power, etc. of the line laser emitter 303b emitting line laser outwards may be controlled. The second control unit 302 is electrically connected to the camera module 303a, and the second control unit 302 may control the camera module 303a to collect an environmental image detected by the line laser. For example, the exposure frequency, exposure duration, working frequency, etc. of the camera module 303a may be controlled. The second control unit 302 is also responsible for performing various functional controls on the autonomous mobile device according to the environmental image collected by the camera module 303a.

The embodiments of the present disclosure do not limit a specific implementation in which the second control unit 302 performs functional control on the autonomous mobile device according to the environmental image. For example, the second control unit 302 may control the autonomous mobile device to implement various functions based on environmental perception according to the environmental image. For example, the functions of object recognition, tracking and classification on vision algorithms may be realized. In addition, based on the advantages of high precision of line laser detection, the functions of high real-time performance, high robustness, and high-precision positioning and map construction may also be realized. Furthermore, all-round support may be provided for motion planning, path navigation, positioning, etc. based on a constructed high-precision environment map. Certainly, the second control unit 302 may also perform travel control on the autonomous mobile device according to the environmental image. For example, the autonomous mobile device is controlled to perform actions such as continuing forward, moving backward, and turning.

In addition, in the embodiments of the present disclosure, an implementation in which the first control unit 301 and the second control unit 302 control the structured light module 303 to work is not limited. Any implementation capable of controlling the structured light module 303 to work is applicable to the embodiments of the present disclosure. For example, the second control unit 302 performs exposure control on the camera module 303a, and the first control unit 301 controls the line laser emitter 303b to emit line laser during the exposure of the camera module 303a, so that the camera module 303a collects an environmental image detected by the line laser.

Further optionally, the first control unit 301 is also electrically connected to the camera module 303a. The second control unit 302 performs exposure control on the camera module 303a, and a synchronization signal generated by the camera module 303a at each exposure is output to the first control unit 301. The first control unit 301 controls the line laser emitter 303b to work according to the synchronization signal. That is, the line laser emitter 303b is controlled to emit line laser outwards during the exposure of the camera module so as to detect environmental information within a front region. The synchronization signal is a time reference signal provided for other devices or components needing to synchronously process information. For example, an exposure synchronization (LED STROBE) signal is a time reference signal provided by the camera module 303a to the line laser emitter 303b, and is a trigger signal for triggering the line laser emitter 303b to emit line laser outwards. The synchronization signal may be, but is not limited to, a switching signal, a continuous pulse signal, etc.

In the present embodiment, a working mode in which the first control unit 301 controls the line laser emitters 303b located on two sides of the camera module 303a is not limited. Optionally, the first control unit 301 controls the line laser emitters 303b located on two sides of the camera module 303a to work alternately according to the synchronization signal. For example, during each exposure of the camera module 303a, the first control unit 301 controls the line laser emitter 303b on one side to work, and the line laser emitters 303b on two sides work alternately, so as to achieve the purpose that the line laser emitters 303b on two sides work alternately. In this case, the environmental image collected each time by the camera module 303a is not a full image but a half image. In order to facilitate the identification of whether the environmental image collected at each exposure is a left half image or a right half image, it is necessary to distinguish the line laser emitters in a working state during exposure. In order to facilitate the distinguishing of the line laser emitters in a working state during each exposure, the first control unit 301 is also electrically connected to the second control unit 302, and the first control unit 301 controls the line laser emitters 303b to work alternately according to a synchronization signal, and outputs a laser source distinguishing signal to the second control unit 302. The second control unit 302 performs left-right marking on the environmental image collected by the camera module 303a at each exposure according to the laser source distinguishing signal. If the line laser emitter 303b on the left side of the camera module 303a is in a working state during the current exposure, the environmental image collected during the exposure may be marked as a right half image. On the contrary, if the line laser emitter 303b on the right side of the camera module 303a is in a working state during the current exposure, the environmental image collected during the exposure may be marked as a left half image.

It is to be noted that signal parameters of laser source distinguishing signals corresponding to different line laser emitters are different, and the laser source distinguishing signal may be a voltage signal, a current signal or a pulse signal, etc.

For example, the laser source distinguishing signal is a voltage signal. Assuming that there are two line laser emitters distributed on two sides of the camera module, the voltage of a laser source distinguishing signal corresponding to the left line laser emitter is 0 V, and the voltage of a laser source distinguishing signal corresponding to the right line laser emitter is 3.3 V. Certainly, as the number of line laser emitters increases, the laser source distinguishing signals may also increase adaptively to satisfy the distinguishing of different line laser emitters. For example, assuming that there is one line laser emitter on the left side of the camera module and two line laser emitters on the right side of the camera module, it is not only necessary to distinguish the line laser emitters on the left and right sides, but also to distinguish the two line laser emitters on the right side, and three laser source distinguishing signals may be set, which are 0 V, 3.3 V and 5 V respectively. The laser source distinguishing signal of 0 V corresponds to the line laser emitter on the left side. The laser source distinguishing signals of 3.3 V and 5 V correspond to the two line laser emitters on the right side respectively. The voltage value of the laser source distinguishing signal here is merely illustrative and not limiting.

Further optionally, under the condition that the first control unit 301 controls the line laser emitters 303b to work alternately according to the synchronization signal, the second control unit 302 may also control the camera module 303a to alternately set a working mode of the lens thereof to be adapted to the line laser emitter 303b in the working state. The second control unit 302 controls the camera module 303a to alternately set the working mode of the lens thereof, and is an implementation of performing left-right marking on the environmental image collected by the camera module 303a at each exposure.

Specifically, under the condition that the second control unit 302 controls the camera module 303a to alternately set the working mode of the lens thereof, when the first control unit 301 controls the line laser emitter 303b located on the left side of the camera module 303a to work according to the synchronization signal, the second control unit 302 may recognize that the line laser emitter on the left side is in the working state during the current exposure according to the laser source distinguishing signal, and then controls the lens of the camera module 303a to work in a right half mode. In the right half mode, the environmental image collected by the camera module 303a will be marked as a right half image. When the first control unit 301 controls the line laser emitter 303b located on the right side of the camera module 303a to work according to the synchronization signal, the second control unit 302 may recognize that the line laser emitter on the right side is in the working state during the current exposure according to the laser source distinguishing signal, and then controls the lens of the camera module 303a to work in a left half mode. In the left half mode, the environmental image collected by the camera module 303a will be marked as a left half image.

Further optionally, under the condition that the structured light module 303 includes a laser drive circuit, the first control unit 301 may send an on-off control signal and a PWM signal to the line laser emitters 303b through the laser drive circuit in the structured light module 303 to drive the line laser emitters 303b to work.

Certainly, in addition to controlling the line laser emitters 303b located on two sides of the camera module 303a to work alternately, it is also possible to control the line laser emitters 303b located on two sides of the camera module 303a to work simultaneously. When the line laser emitters 303b located on two sides of the camera module 303a work simultaneously, the lens of the camera module 303a works in a full mode.

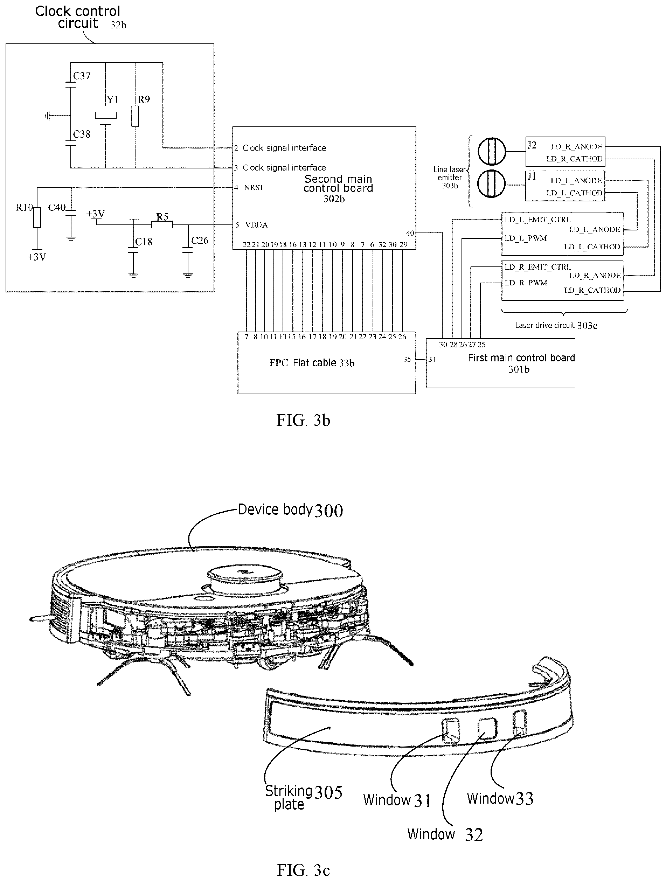

In the embodiments of the present disclosure, the implementation forms of the first control unit 301 and the second control unit 302 are not limited, and may be, for example, but not limited to, CPU, GPU, MCU, processing chips implemented based on FPGA or CPLD, or single-chip microcomputers, etc. In an optional embodiment, the first control unit 301 and the second control unit 302 are implemented using a single-chip microcomputer. In other words, the first control unit 301 and the second control unit 302 are in the form of a single-chip microcomputer. Optionally, as shown in FIG. 3b, an implementation structure of the first control unit 301 includes a first main control board 301b, and an implementation structure of the second control unit 302 includes a second main control board 302b.

In the embodiments of the present disclosure, implementation structures of the first main control board 301b and the second main control board 302b are not limited. Any circuit board capable of realizing a control function is applicable to the embodiments of the present disclosure. For example, it may be an FPGA card, a single-chip microcomputer, etc. Optionally, in order to reduce the implementation cost, a cheap and cost-effective single-chip microcomputer may be used as a main control board. As shown in FIG. 3b, the first main control board 301b and the second main control board 302b each include a plurality of IO interfaces (pins). The IO interfaces of the first main control board 301b or the second main control board 302b each include an interface for connecting a clock signal, and these interfaces may be electrically connected to a clock control circuit 32b and are responsible for receiving the clock signal provided by the clock control circuit 32b. For simplicity of illustration, in FIG. 3b, only an electrical connection relationship between the second main control board 302b and the clock control circuit 32b is illustrated as an example. In FIG. 3b, the clock control circuit 32b includes a resistor R9, a crystal oscillator Y1 connected in parallel to the resistor R9, a capacitor C37 connected in parallel to Y1, and C38 connected in series to the capacitor C37. The capacitors C37 and C38 are both grounded. Two ends of the resistor R9 respectively lead out an output end of the clock control circuit 32b and are electrically connected to the clock signal interface on the second main control board 302b. The clock control circuit 32b further includes a resistor R10 to which a voltage of +3 V is connected. The resistor R10 is grounded via a capacitor C40, and an output end is led out between the resistor R10 and the capacitor C40 to be electrically connected to an asynchronous reset (NRST) pin of the second main control board 302b. Further, the clock control circuit 32b further includes a resistor R5. One end of the resistor R5 is grounded via a capacitor C26, and the other end of the resistor R5 is grounded via C18. A voltage of +3 V and a processor of the autonomous mobile device are connected between R5 and C18, and an output end is led out between the resistor R5 and the capacitor C26 to be electrically connected to a VDDA pin of the second main control board 302b. The crystal oscillator Y1 in the clock control circuit 32b provides a high-frequency pulse, which becomes an internal clock signal of the second main control board 302b after frequency division processing, and the clock signal is used as a control signal for coordinating the operation of various members. A connection relationship between the clock control circuit 32b and the second main control board 302b is: one end of R9 is connected to 302b_pin2, the other end is connected to 302b_pin3, 302b_pin4 is connected between R10 and C40, and 302b_pin5 is connected between R5 and C26. 302b_pin2 represents a second pin of the second main control board 302b, i.e. a clock signal interface 2 in FIG. 3b. 302b_pin3 represents a third pin of the second main control board 302b, i.e. a clock signal interface 3 in FIG. 3b. 302b_pin4 represents a fourth pin of the second main control board 302b, i.e. an NRST pin in FIG. 3b. 302b_pin5 represents a fifth pin of the second main control board 302b, i.e. a VDDA pin in FIG. 3b.

In the embodiments of the present disclosure, a connection mode between the camera module 303a and the second main control board 302b is not limited. The camera module 303a may be directly connected to the second main control board 302b, and may also be connected to the second main control board 302b through a flexible printed circuit (FPC) flat cable 33b.

Under the condition that the camera module 303a and the second main control board 302b are connected through the FPC flat cable 33b, a connection relationship between the FPC flat cable 33b and the second main control board 302b is: 33b_pin7-302b_pin22, 33b_pin8-302b_pin21, 33b_pin10-302b_pin20, 33b_pin11-302b_pin19, 33b_pin13-302b_pin18, 33b_pin15-302b_pin16, 33b_pin16-302b_pin13, 33b_pin17-302b_pin12, 33b_pin18-302b_pin11, 33b_pin19-302b_pin10, 33b_pin20-302b_pin9, 33b_pin21-302b_pin8, 33b_pin22-302b_pin7, 33b_pin23-302b_pin6, 33b_pin24-302b_pin32, 33b_pin25-302b_pin30, 33b_pin26-302b_pin29. In addition, a connection relationship between the FPC flat cable 33b and the first main control board 301b is: 301b_pin31-33b_pin35. "-" represents a connection relationship. 33b_pinx represents a pin x on the FPC flat cable 33b. 302b_pinx represents a pin x on the second main control board 302b. 301b_pinx represents a pin x on the first main control board 301b. x is a natural number greater than or equal to 0. Pin names, pin numbers and connection relationships between corresponding pin numbers shown in FIG. 3b are merely exemplary and should not be construed as limiting the circuit structure of the present disclosure.

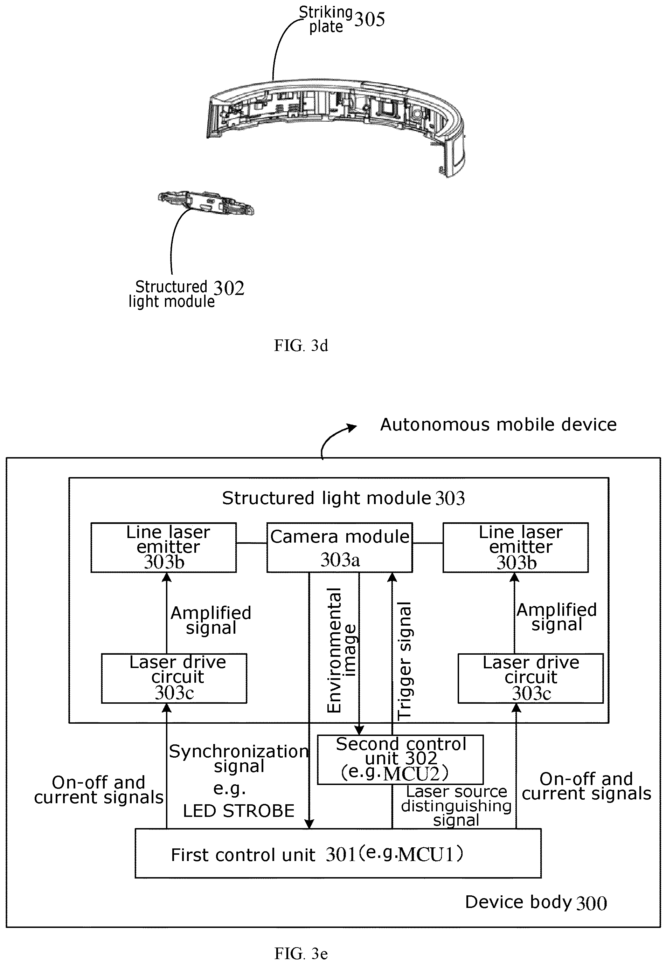

In an optional embodiment, as shown in FIG. 3e, the structured light module 303 may further include a laser drive circuit 303c. A circuit implementation structure of the laser drive circuit 303c is similar to that of the laser drive circuit 204a or 204b shown in FIG. 2b, and will not be described again. In FIG. 3b, a connection relationship between the laser drive circuits 303c and the first main control board 301b is illustrated with the structured light module 303 including two laser drive circuits 303c. J1 in FIG. 3b is connected to the left line laser emitter 303b in FIG. 3e, and J1 is a control interface of the left line laser emitter 303b. J2 in FIG. 3b is connected to the right line laser emitter 303b in FIG. 3e, and J2 is a control interface of the right line laser emitter 303b. As shown in FIG. 3b, the laser drive circuit 303c for driving the left line laser emitter 303b includes pins LD_L_CATHOD and LD_L_ANODE, which are electrically connected to pins LD_L_CATHOD and LD_L_ANODE of J1 respectively, and the laser drive circuit 303c for driving the right line laser emitter 303b includes pins LD_R_CATHOD and LD_R_ANODE, which are electrically connected to pins LD_R_CATHOD and LD_R_ANODE of J2 respectively. In FIG. 3b, 301b_pin28 is connected to an LD_L_EMIT_CTRL end of the laser drive circuit 303c for driving the left line laser emitter 303b, so as to control the on and off of the left line laser emitter 303b. For example, when 301b_pin28 is at a high level, the left line laser emitter 303b is in an on state, and when 301b_pin28 is at a low level, the left line laser emitter 303b is in an off state. In FIG. 3b, 301b_pin27 is connected to an LD_R_EMIT_CTRL end of the laser drive circuit 303c for driving the right line laser emitter 303b, so as to control the on and off of the right line laser emitter 303b. For example, when 301b_pin27 is at a high level, the right line laser emitter 303b is in an on state, and when 301b_pin27 is at a low level, the right line laser emitter 303b is in an off state. In FIG. 3b, 301b_pin26 is connected to an LD_L_PWM end of the laser drive circuit 303c for driving the left line laser emitter 303b, so as to control a working current of the left line laser emitter 303b. 301b_pin26 outputs a PWM signal, and a duty cycle of the PWM signal may increase from 0% to 100%. As the duty cycle increases, the working current of the left line laser emitter 303b also increases, so that the magnitude of the working current of the left line laser emitter 303b may be controlled by adjusting the duty cycle of the PWM signal output by 301b_pin26. In FIG. 3b, 301b_pin25 is connected to an LD_R_PWM end of the laser drive circuit 303c for driving the right line laser emitter 303b, so as to control a working current of the right line laser emitter 303b. Similarly, 301b_pin25 also outputs a PWM signal, and the magnitude of the working current of the right line laser emitter 303b may also be controlled by adjusting a duty cycle of the PWM signal output by 301b_pin25. In addition, a connection relationship between the first main control board 301b and the second main control board 302b is: 301b_pin30-302b_pin40.

The principle of cooperation of the first control unit 301 and the second control unit 302 with the structured light module 303 is illustrated below with the first control unit 301 being MCU1 and the second control unit 302 being MCU2. As shown in FIG. 3e, after power-on, MCU1 and MCU2 start to initialize the IO interface, and configure the structured light module 303 via an I2C interface. After the initialization is completed, MCU1 and MCU2 control the structured light module 303 via the I2C interface to realize the control of the camera module 303a and the line laser emitters 303b in the structured light module 303. MCU2 sends a trigger signal to the camera module 303a via the I2C interface, and the camera module 303a receives the trigger signal to start exposure and simultaneously sends an exposure synchronization (LED STROBE) signal to MCU1. After receiving the LED STROBE signal, MCU1 drives the right line laser emitter 303b to emit laser through the laser drive circuit 303c and sends a laser source distinguishing signal corresponding to the right line laser emitter 303b to MCU2 on a rising edge of the LED STROBE signal. MCU1 turns off the right line laser emitter 303b on a falling edge of the LED STROBE signal. After the exposure is completed, the camera module 303a transmits collected picture data to MCU2, and MCU2 performs left-right marking on the collected image data according to the laser source distinguishing signal. Similarly, MCU2 sends a trigger signal to the camera module 303a via I2C, and the camera module 303a receives the trigger signal to start exposure and simultaneously sends an exposure synchronization (LED STROBE) signal to MCU1. After receiving the LED STROBE signal, MCU1 drives the left line laser emitter 303b to emit laser through the laser drive circuit 303c and sends a laser source distinguishing signal corresponding to the right line laser emitter 303b to MCU2 on a rising edge of the LED STROBE signal. MCU1 turns off the right line laser emitter 303b on a falling edge of the LED STROBE signal. After the exposure is completed, the camera module 303a transmits collected picture data to MCU2, and MCU2 performs left-right marking on the collected picture data according to the laser source distinguishing signal. The above-described process is repeated until the operation is completed.

In the embodiments of the present disclosure, a specific position of the structured light module 303 in the device body 300 is not limited. For example, the position may be, but is not limited to, the front side, rear side, left side, right side, top, middle, and bottom of the device body 300, etc. Further, the structured light module 303 is arranged in a middle position, a top position or a bottom position in the height direction of the device body 300.

In an optional embodiment, the autonomous mobile device moves forward to perform an operation task, and in order to better detect environmental information in front, the structured light module 303 is arranged on a front side of the device body 300. The front side is a side to which the device body is oriented during the forward movement of the autonomous mobile device.

In yet another optional embodiment, in order to protect the structured light module 303 from external forces, the front side of the device body 300 is further equipped with a striking plate 305, and the striking plate 305 is located outside the structured light module 303. As shown in FIG. 3c, an exploded view of the device body 300 and the striking plate 305 is shown. The structured light module 303 may or may not be installed on the striking plate. This is not limited thereto. Windows are provided in a region on the striking plate corresponding to the structured light module 303 so as to expose the camera module 303a and the line laser emitters 303b in the structured light module 303. Further optionally, windows are provided respectively in positions on the striking plate corresponding to the camera module 303a and the line laser emitters 303b. As shown in FIG. 3c, windows 31, 32 and 33 are provided on the striking plate 305. The windows 31 and 33 correspond to the line laser emitters 303b, and the window 32 corresponds to the camera module 303a.

In yet another optional embodiment, the structured light module 303 is installed on an inside wall of the striking plate 305. FIG. 3d shows an exploded view of the structured light module 303 and the striking plate 305.

In yet another optional embodiment, a distance from the center of the structured light module 303 to a working surface on which the autonomous mobile device is located is in the range of 30-60 mm. In order to reduce the spatial blind zone of the autonomous mobile device and make the field angle sufficiently large, it is further optional that the distance from the center of the structured light module 303 to the working surface on which the autonomous mobile device is located is 47 mm.

Further, in addition to the various components mentioned above, the autonomous mobile device of the present embodiment may include some basic components such as one or more memories, a communication component, a power component, and a drive component.

The one or more memories are mainly used for storing computer programs that may be executed by a main controller to cause the main controller to control the autonomous mobile device to perform corresponding tasks. In addition to storing the computer programs, the one or more memories may also be configured to store various other data to support operations on the autonomous mobile device. Examples of such data include instructions for any application or method operating on the autonomous mobile device, map data of an environment/scenario in which the autonomous mobile device is located, operation modes, working parameters, etc.

The communication component is configured to facilitate wired or wireless communication between a device where the communication component is located and other devices. The device where the communication component is located may access a wireless network based on a communication standard, such as Wifi, 2G or 3G, 4G, 5G, or a combination thereof. In one exemplary embodiment, the communication component receives a broadcast signal or broadcast-related information from an external broadcast management system via a broadcast channel. In one exemplary embodiment, the communication component may also include a near field communication (NFC) module, a radio frequency identification (RFID) technology, an infrared data association (IrDA) technology, an ultra wide band (UWB) technology, a Bluetooth (BT) technology, etc.

Optionally, the drive assembly may include a drive wheel, a drive motor, a universal wheel, etc. Optionally, as shown in FIG. 3c, the autonomous mobile device of the present embodiment may be implemented as a floor sweeping robot, and in the case of being implemented as a floor sweeping robot, the autonomous mobile device may further include a sweeping component, which may include a sweeping motor, a sweeping brush, a dust raising brush, a dust collection fan, etc. These basic components and the composition of the basic components contained in different autonomous mobile devices will be different, and the embodiments of the present disclosure are only some examples.

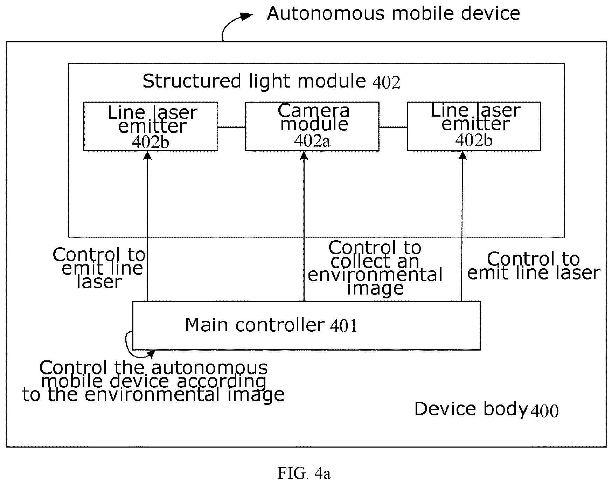

Based on the above-described structured light module, an embodiment of the present disclosure also provides a schematic structural diagram of another autonomous mobile device. As shown in FIG. 4a, the autonomous mobile device includes a device body 400. The device body 400 is provided with a main controller 401 and a structured light module 402. The structured light module 402 includes a camera module 402a and line laser emitters 402b distributed on two sides of the camera module. The detailed description of the structured light module 402 may be seen in the foregoing embodiments and will not be described in detail herein.

In the embodiments of the present disclosure, the autonomous mobile device may be any mechanical device capable of performing highly autonomous space movement in an environment where it is located, such as a robot, a purifier, and an unmanned aerial vehicle. The robot may include a floor sweeping robot, a glass cleaning robot, a home accompanying robot, a guest greeting robot, etc.

Certainly, the shape of the autonomous mobile device may vary depending on different implementation forms of the autonomous mobile device. The present embodiment does not limit the implementation form of the autonomous mobile device. Taking an outer contour shape of the autonomous mobile device as an example, the outer contour shape of the autonomous mobile device may be an irregular shape or some regular shapes. For example, the outer contour shape of the autonomous mobile device may be a regular shape such as a circle, an ellipse, a square, a triangle, a drop shape, or a D shape. Shapes other than a regular shape are called irregular shapes. For example, the outer contour of a humanoid robot, the outer contour of an unmanned vehicle and the outer contour of an unmanned aerial vehicle belong to the irregular shapes.

The embodiments of the present disclosure do not limit that the main controller 401 is electrically connected to the structured light module 402 and may control the structured light module 402 to work. Specifically, the main controller 401 is electrically connected to the camera module 402a and the line laser emitters 402b, respectively. The main controller 401, on the one hand, controls the line laser emitters 402b to emit line laser outwards and may, for example, control the time, emission power, etc. of the line laser emitter 402b emitting line laser outwards, and on the other hand, controls the camera module 402a to collect an environmental image detected by the line laser and may, for example, control the exposure frequency, exposure duration, working frequency, etc. of the camera module 402a. Further, the main controller 401 is also responsible for performing functional control on the autonomous mobile device according to the environmental image.

The embodiments of the present disclosure do not limit a specific implementation in which the main controller 401 performs functional control on the autonomous mobile device according to the environmental image. For example, the main controller 401 may control the autonomous mobile device to implement various functions based on environmental perception according to the environmental image. For example, the functions of object recognition, tracking and classification on vision algorithms may be realized. In addition, based on the advantages of high precision of line laser detection, the functions of high real-time performance, high robustness, and high-precision positioning and map construction may also be realized. Furthermore, all-round support may be provided for motion planning, path navigation, positioning, etc. based on a constructed high-precision environment map. Certainly, the main controller 401 may also perform travel control on the autonomous mobile device according to the environmental image. For example, the autonomous mobile device is controlled to perform actions such as continuing forward, moving backward, and turning.

In the embodiments of the present disclosure, the implementation form of the main controller 401 is not limited, and may be, for example, but not limited to, CPU, GPU, MCU, processing chips implemented based on FPGA or CPLD, or single-chip microcomputers, etc.

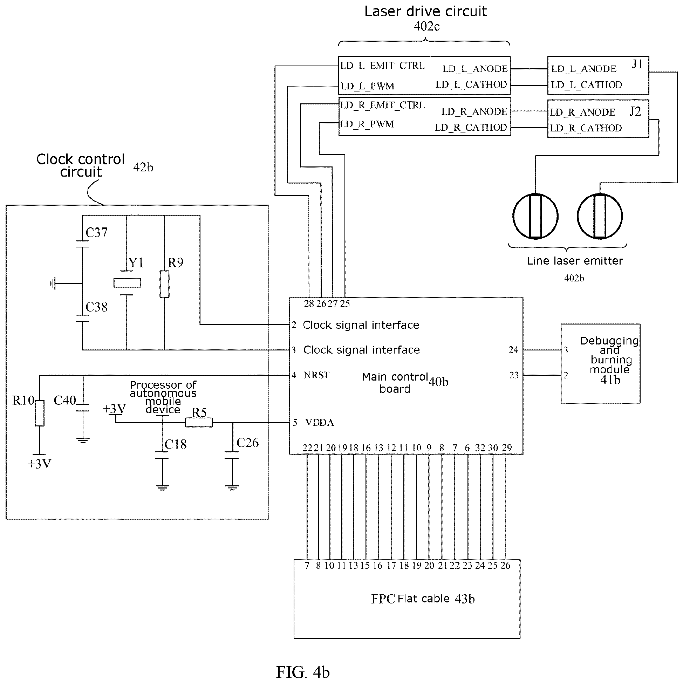

In an optional embodiment, the main controller 401 is implemented using a single-chip microcomputer. In other words, the main controller 401 is in the form of a single-chip microcomputer. Optionally, as shown in FIG. 4b, an implementation structure of the main controller 401 includes a main control board 40b.

In the embodiments of the present disclosure, an implementation structure of the main control board 40b is not limited. Any circuit board capable of realizing a control function is applicable to the embodiments of the present disclosure. For example, it may be an FPGA card, a single-chip microcomputer, etc. Optionally, in order to reduce the implementation cost, a cheap and cost-effective single-chip microcomputer may be used as a main control board.

As shown in FIG. 4b, the main control board 40b includes a plurality of IO interfaces (pins). In these interfaces, some IO interfaces may serve as test interfaces to be connected to a debugging and burning module 41b. The debugging and burning module 41b is used for completing the burning and writing of a configuration file and the testing of hardware functions after the burning and writing are successful. A connection relationship between the debugging and burning module 41b and the main control board 40b is: a second pin 41b_pin2 of the debugging and burning module 41b is electrically connected to a 23rd pin 40b_pin23 of the main control board 40b, and a third pin 41b_pin3 of the debugging and burning module 41b is electrically connected to a 24th pin 40b_pin24 of the main control board 40b. The pins 41b_pin3 and 40b_pin24 belong to the IO interfaces for testing.

As shown in FIG. 4b, the IO interfaces of the main control board 40b include an interface for connecting a clock signal, and these interfaces may be electrically connected to a clock control circuit 42b and are responsible for receiving the clock signal provided by the clock control circuit 42b. The clock control circuit 42b includes a resistor R9, a crystal oscillator Y1 connected in parallel to the resistor R9, a capacitor C37 connected in parallel to Y1, and C38 connected in series to the capacitor C37. The capacitors C37 and C38 are both grounded. Two ends of the resistor R9 respectively lead out an output end of the clock control circuit 42b and are electrically connected to the clock signal interface on the main control board 40b. The clock control circuit 42b further includes a resistor R10 to which a voltage of +3 V is connected. The resistor R10 is grounded via a capacitor C40, and an output end is led out between the resistor R10 and the capacitor C40 to be electrically connected to an asynchronous reset (NRST) pin of the main control board 40b. Further, the clock control circuit 42b further includes a resistor R5. One end of the resistor R5 is grounded via a capacitor C26, and the other end of the resistor R5 is grounded via C18. A voltage of +3 V and a processor of the autonomous mobile device are connected between R5 and C18, and an output end is led out between the resistor R5 and the capacitor C26 to be electrically connected to a VDDA pin of the main control board 40b. The crystal oscillator Y1 in the clock control circuit 42b provides a high-frequency pulse, which becomes an internal clock signal of the main control board 40b after frequency division processing, and the clock signal is used as a control signal for coordinating the operation of various members. In addition, under the condition that the structured light module 402 is installed on an autonomous mobile device, the clock control circuit 42b may be connected to the main controller 401 to enable the autonomous mobile device to control the structured light module 402. A connection relationship between the clock control circuit 42b and the main control board 40b is: one end of R9 is connected to 40b_pin2, the other end is connected to 40b_pin3, 40b_pin4 is connected between R10 and C40, and 40b_pin5 is connected between R5 and C26. 40b_pin2 represents a second pin of the main control board 40b. 40b_pin3 represents a third pin of the main control board 40b. 40b_pin4 represents a fourth pin (NRST) of the main control board 40b. 40b_pin5 represents a fifth pin (VDDA) of the main control board 40b.

In the embodiments of the present disclosure, a connection mode between the camera module 402a and the main control board 40b is not limited. The camera module 402a may be directly connected to the main control board 40b, and may also be connected to the main control board 40b through an FPC flat cable 43b.

Under the condition that the camera module 402a and the main control board 40b are connected through the FPC flat cable 43b, a connection relationship between the FPC flat cable 43b and the main control board 40b is: 43b_pin7-40b_pin22, 43b_pin8-40b_pin21, 43b_pin10-40b_pin20, 43b_pin11-40b_pin19, 43b_pin13-40b_pin18, 43b_pin15-40b_pin16, 43b_pin16-40b_pin13, 43b_pin17-40b_pin12, 43b_pin18-40b_pin11, 43b_pin19-40b_pin10, 43b_pin20-40b_pin9, 43b_pin21-40b_pin8, 43b_pin22-40b_pin7, 43b_pin23-40b_pin6, 43b_pin24-40b_pin32, 43b_pin25-40b_pin30, 43b_pin26-40b_pin29. "-" represents a connection relationship. 43b_pinx represents a pin x on the FPC flat cable 43b. 40b_pinx represents a pin x on the main control board 40b. x is a natural number greater than or equal to 0.

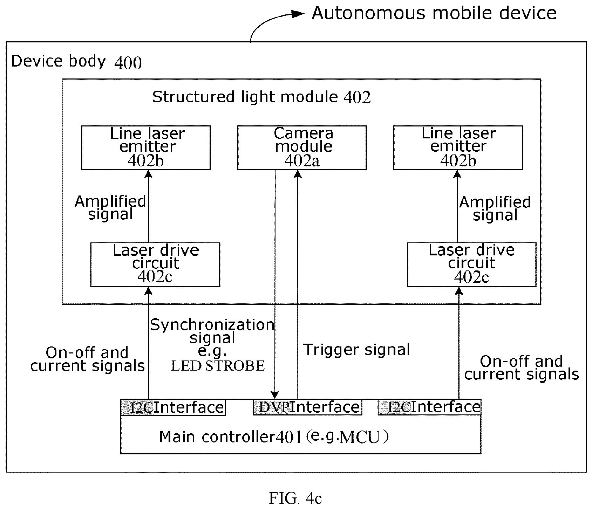

Further, as shown in FIG. 4c, the structured light module 402 further includes a laser drive circuit 402c. A circuit implementation structure of the laser drive circuit 402c is similar to that of the laser drive circuit 204a or 204b shown in FIG. 2b, and will not be described again. Assuming that the structured light module 402 shown in FIG. 4c includes two laser drive circuits 402c for respectively driving the line laser emitters 402b located on the left and right sides of the camera module 402a, a connection relationship between the laser drive circuits 402c and the main control board 40b is illustrated with two laser drive circuits 402c shown in FIG. 4c. J1 in FIG. 4b is connected to the left line laser emitter 402b in FIG. 4c, and J1 is a control interface of the left line laser emitter 402b. J2 in FIG. 4b is connected to the right line laser emitter 402b in FIG. 4c, and J2 is a control interface of the right line laser emitter 402b. As shown in FIG. 4b, the laser drive circuit 402c for driving the left line laser emitter 402b in FIG. 4c includes pins LD_L_ CATHOD and LD_L_ANODE, which are electrically connected to pins LD_L_CATHOD and LD_L_ANODE of J1 respectively, and the laser drive circuit 402c for driving the right line laser emitter 402b in FIG. 4c includes pins LD_R_CATHOD and LD_R_ANODE, which are electrically connected to pins LD R CATHOD and LD_R_ANODE of J2 respectively. In FIG. 4b, 40b_pin28 is connected to an LD_L_EMIT_CTRL end of the laser drive circuit 402c for driving the left line laser emitter 402b in FIG. 4c, so as to control the on and off of the left line laser emitter 402b. For example, when 40b_pin28 is at a high level, the left line laser emitter 402b is in an on state, and when 40b_pin28 is at a low level, the left line laser emitter 402b is in an off state. In FIG. 4b, 40b_pin27 is connected to an LD_R_EMIT_CTRL end of the laser drive circuit 402c for driving the right line laser emitter 402b in FIG. 4c, so as to control the on and off of the right line laser emitter 402b. For example, when 40b_pin27 is at a high level, the right line laser emitter 402b is in an on state, and when 40b_pin27 is at a low level, the right line laser emitter 402b is in an off state. In FIG. 4b, 40b_pin26 is connected to an LD_L_PWM end of the laser drive circuit 402c for driving the left line laser emitter 402b in FIG. 4c, so as to control a current of the left line laser emitter 402b. 40b_pin26 is controlled by PWM, and a duty cycle of PWM may increase from 0% to 100%. As the duty cycle increases, the current of the left line laser emitter 402b also increases, so that the magnitude of the current of the left line laser emitter 402b may be controlled according to the duty cycle of 40b_pin26. In FIG. 4b, 40b_pin25 is connected to an LD_R_PWM end of the laser drive circuit 402c for driving the right line laser emitter 402b in FIG. 4c, so as to control a current of the right line laser emitter 402b. Similarly, 40b_pin25 is also controlled by PWM. Therefore, the magnitude of the current of the right line laser emitter 402b may be controlled according to the duty cycle of 40b_pin25.

In an optional embodiment, the main controller 401 is specifically used for performing exposure control on the camera module 402a, acquiring a synchronization signal generated by the camera module 402a at each exposure, controlling the line laser emitters 402b to work alternately according to the synchronization signal, and performing left-right marking on environmental images collected by the camera module 402a at each exposure.

In the present embodiment, the synchronization signal is a time reference signal provided for other devices or components needing to synchronously process information. For example, an exposure synchronization (LED STROBE) signal is a time reference provided by the camera module 402a and the line laser emitter 402b, and is a trigger signal for triggering the line laser emitter 402b to emit line laser outwards. The synchronization signal may be, but is not limited to, a switching signal, a continuous pulse signal, etc.

In the above-described various embodiments of the present disclosure, a working mode of the line laser emitters 402b located on two sides of the camera module 402a is not limited. Optionally, the main controller 401 controls the line laser emitters 402b to work alternately according to the synchronization signal, and controls the camera module 402a to alternately set a working mode of the lens thereof to be adapted to the line laser emitter 402b in the working state.

Further optionally, when controlling the camera module 402a to alternately set the working mode of the lens thereof, the main controller 401 is specifically used for: controlling, when the line laser emitter 402b located on the left side of the camera module 402a is controlled to work, the lens of the camera module 402a to work in a right half mode; and controlling, when the line laser emitter 402b located on the right side of the camera module 402a is controlled to work, the lens of the camera module 402a to work in a left half mode.

Further optionally, the main controller 401 may control the camera module 402a to expose, and control the line laser emitter 402b on one of the sides to work during each exposure of the camera module 402a, so as to achieve the purpose that the line laser emitters 402b on two sides work alternately. Specifically, the main controller 401 may send an on-off control signal and a PWM signal to the line laser emitters 402b through the laser drive circuit 204 shown in FIG. 2b to drive the line laser emitters 402b to work.

Certainly, in addition to controlling the line laser emitters 402b located on two sides of the camera module 402a to work alternately, it is also possible to control the line laser emitters 402b located on two sides of the camera module 402a to work simultaneously. When the line laser emitters 402b located on two sides of the camera module 402a work simultaneously, the lens of the camera module 402a works in a full mode.

In the embodiments of the present disclosure, when the line laser emitters 402b work alternately, the camera module 402a alternately sets the working mode of the lens thereof, and an implementation of performing left-right marking on the environmental image collected by the camera module 402a by the main controller 401 is not limited. For example, when the lens of the camera module 402a works in the left half mode, the right line laser emitter 402b emits laser, the camera module 402a collects an environmental image, and the main controller 401 marks the collected environmental image as a left half environmental image, etc.

The principle of cooperation of MCU with the structured light module 402 is illustrated below with the main controller 401 being MCU. As shown in FIG. 4c, after power-on, MCU starts to initialize the IO interface, and configure the structured light module 402 via an I2C interface. After the initialization is completed, MCU controls the structured light module 402 via the I2C interface to realize the control of the camera module 402a and the line laser emitters 402b in the structured light module 402. MCU sends a trigger signal to the camera module 402a via the I2C interface, and the camera module 402a receives the trigger signal to start exposure and simultaneously sends an exposure synchronization (LED STROBE) signal to MCU. After receiving the LED STROBE signal, MCU drives the right line laser emitter 402b to emit laser through the laser drive circuit 402c on a rising edge of the LED STROBE signal. MCU turns off the right line laser emitter 402b on a falling edge of the LED STROBE signal. After the exposure is completed, the camera module 402a triggers MCU to read picture data and process the picture data through a digital video port (DVP) on the main control board. Similarly, MCU sends a trigger signal to the camera module 402a via I2C, and the camera module 402a receives the trigger signal to start exposure and simultaneously sends an exposure synchronization (LED STROBE) signal to MCU. After receiving the LED STROBE signal, MCU drives the left line laser emitter 402b to emit laser through the laser drive circuit 402c on a rising edge of the LED STROBE signal. MCU turns off the right line laser emitter 402b on a falling edge of the LED STROBE signal. After the exposure is completed, the camera module 402a triggers MCU to read picture data and process the picture data through a DVP on the main control board. The above-described process is repeated until the operation is completed.

In the embodiments of the present disclosure, a specific position of the structured light module 402 in the device body 400 is not limited. For example, the position may be, but is not limited to, the front side, rear side, left side, right side, top, middle, and bottom of the device body 400, etc. Further, the structured light module 402 is arranged in a middle position, a top position or a bottom position in the height direction of the device body 400.

In an optional embodiment, the autonomous mobile device moves forward to perform an operation task, and in order to better detect environmental information in front, the structured light module 402 is arranged on a front side of the device body 400. The front side is a side to which the device body 400 is oriented during the forward movement of the autonomous mobile device.

In yet another optional embodiment, in order to protect the structured light module 402 from external forces, the front side of the device body 400 is further equipped with a striking plate, and the striking plate is located outside the structured light module 402. An exploded view of the device body and the striking plate may be seen in FIG. 3c. The structured light module may or may not be installed on the striking plate. This is not limited thereto. Windows are provided in a region on the striking plate corresponding to the structured light module 402 so as to expose the camera module 402a and the line laser emitters 402b in the structured light module 402.

Further optionally, windows are provided respectively in positions on the striking plate corresponding to the camera module 402a and the line laser emitters 402b.

In yet another optional embodiment, the structured light module 402 is installed on an inside wall of the striking plate.

In yet another optional embodiment, a distance from the center of the structured light module 402 to a working surface on which the autonomous mobile device is located is in the range of 30-60 mm. In order to reduce the spatial blind zone of the autonomous mobile device and make the field angle sufficiently large, it is further optional that the distance from the center of the structured light module 402 to the working surface on which the autonomous mobile device is located is 47 mm.

Further, in addition to the various components mentioned above, the autonomous mobile device of the present embodiment may include some basic components such as one or more memories, a communication component, a power component, and a drive component.

The one or more memories are mainly used for storing computer programs that may be executed by a main controller to cause the main controller to control the autonomous mobile device to perform corresponding tasks. In addition to storing the computer programs, the one or more memories may also be configured to store various other data to support operations on the autonomous mobile device. Examples of such data include instructions for any application or method operating on the autonomous mobile device, map data of an environment/scenario in which the autonomous mobile device is located, operation modes, working parameters, etc.

The communication component is configured to facilitate wired or wireless communication between a device where the communication component is located and other devices. The device where the communication component is located may access a wireless network based on a communication standard, such as Wifi, 2G or 3G, 4G, 5G, or a combination thereof. In one exemplary embodiment, the communication component receives a broadcast signal or broadcast-related information from an external broadcast management system via a broadcast channel. In one exemplary embodiment, the communication component may also include an NFC module, an RFID technology, an IrDA technology, a UWB technology, a BT technology, etc. Optionally, the drive assembly may include a drive wheel, a drive motor, a universal wheel, etc. Optionally, the autonomous mobile device of the present embodiment may be implemented as a floor sweeping robot, and in the case of being implemented as a floor sweeping robot, the autonomous mobile device may further include a sweeping component, which may include a sweeping motor, a sweeping brush, a dust raising brush, a dust collection fan, etc. These basic components and the composition of the basic components contained in different autonomous mobile devices will be different, and the embodiments of the present disclosure are only some examples.

It is to be noted that the description of "first", "second", etc. herein is intended to distinguish between different messages, devices, modules, etc., does not represent a sequential order, and does not limit "first" and "second" to be of different types. Those skilled in the art will appreciate that the embodiments of the present invention may be provided as a method, a system, or a computer program product. Therefore, the present invention may take the form of an entirely hardware embodiment, an entirely software embodiment, or an embodiment combining software and hardware aspects. Moreover, the present invention may take the form of a computer program product implemented on one or more computer available storage media (including, but not limited to, a disk memory, a CD-ROM, an optical memory, etc.) containing computer available program codes.

The present invention is described with reference to flowcharts and/or block diagrams of the method, the device (system), and the computer program product according to the embodiments of the present invention. It is to be understood that each flow and/or block in the flowcharts and/or the block diagrams and a combination of the flows and/or the blocks in the flowcharts and/or the block diagrams may be implemented by computer program instructions. These computer program instructions may be provided for a general computer, a dedicated computer, an embedded processor, or processors of other programmable data processing devices to generate a machine, so that an apparatus for achieving functions designated in one or more flows of the flowcharts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing devices, so that processing implemented by the computers is generated by executing a series of operation steps on the computers or the other programmable devices, and therefore the instructions executed on the computers or the other programmable devices provide a step of achieving the functions designated in one or more flows of the flowcharts and/or one or more blocks of the block diagrams.

In a typical configuration, a computing device includes one or more central processing units (CPUs), an input/output interface, a network interface, and a memory.

The memory may include a non-persistent memory, a random access memory (RAM), a non-volatile memory, and/or other forms in a computer-readable medium, such as a read only memory (ROM) or a flash RAM. The memory is an example of a computer-readable medium.

The computer-readable medium includes non-volatile and volatile, removable and non-removable media. Information may be stored in any way or by any technology. Information may be computer-readable instructions, data structures, modules of programs, or other data. Examples of a computer storage medium include, but are not limited to, a phase-change random access memory (PRAM), a static random access memory (SRAM), a dynamic random access memory (DRAM), other types of RAMs, a ROM, an electrically erasable programmable read-only memory (EEPROM), a flash memory or other memory technologies, a CD-ROM, a digital versatile disc (DVD) or other optical memories, a cassette tape, a tape and disk memory or other magnetic memories or any other non-transport media. The non-volatile storage medium may be used for storing computing device-accessible information. As defined herein, the computer-readable medium does not include computer-readable transitory media, such as modulated data signals and carrier waves.

It is also to be noted that the terms "including", "containing" or any other variations thereof are intended to cover a non-exclusive inclusion, such that a process, method, article, or device including a series of elements not only includes those elements, but also includes other elements that are not explicitly listed, or also includes elements inherent to such process, method, article, or device. It is not excluded, without more constraints, that additional identical elements exist in the process, method, article, or device including elements defined by a sentence "including a...".

Those skilled in the art will appreciate that the embodiments of the present disclosure may be provided as a method, a system, or a computer program product. Therefore, the present disclosure may take the form of an entirely hardware embodiment, an entirely software embodiment, or an embodiment combining software and hardware. Moreover, the present disclosure may take the form of a computer program product implemented on one or more computer available storage media (including, but not limited to, a disk memory, a CD-ROM, an optical memory, etc.) containing computer available program codes.

The above description is merely the embodiments of the present disclosure and is not intended to limit the present disclosure. Various modifications and variations of the present disclosure will occur to those skilled in the art. Any modifications, equivalent replacements, improvements, etc. that come within the spirit and principles of the present disclosure are intended to be within the scope of the claims appended hereto.

## Claims

1. A structured light module, comprising: a camera module and line laser emitters distributed on two sides of the camera module; wherein,
the line laser emitters is responsible for emitting line laser outwards, and the camera module is responsible for collecting an environmental image detected by the line laser.

2. The structured light module according to claim 1, wherein, the line laser emitters and the camera module are located at the same height in an installation position.

3. The structured light module according to claim 1, further comprising: a fixing seat; wherein, the camera module and the line laser emitters are assembled on the fixing seat.

4. The structured light module according to claim 3, wherein, the fixing seat comprises: a main body portion and end portions located on two sides of the main body portion; wherein, the camera module is assembled on the main body portion, and the line laser emitters are assembled on the end portions;
wherein, end surfaces of the end portions are oriented to a reference plane so that center lines of the line laser emitters intersect with a center line of the camera module at a point, and the reference plane is a plane perpendicular to an end surface or end surface tangent line of the main body portion.

5. The structured light module according to claim 4, wherein, a middle position of the main body portion is provided with a groove, and the camera module is installed in the groove; and the end portions are provided with installation holes, and the line laser emitters are installed in the installation holes.

6. The structured light module according to claim 4, further comprising: a fixing cover assembled over the fixing seat; wherein, a cavity is formed between the fixing cover and the fixing seat to accommodate connecting lines of the camera module and the line laser emitters with a host controller.

7. The structured light module according to claim 4, wherein, a lens of the camera module is located within an outer edge of the groove.

8. The structured light module according to claim 4, wherein, the end surface of the main body portion is an inwardly recessed curved surface.

9. The structured light module according to any one of claims 1 to 8, wherein, there are two line laser emitters, and the two line laser emitters are symmetrically distributed on two sides of the camera module.

10. The structured light module according to any one of claims 1 to 8, wherein, the camera module is an infrared camera module.

11. An autonomous mobile device, comprising: a device body; wherein,
the device body is provided with a first control unit, a second control unit, and a structured light module; the structured light module comprises: a camera module and line laser emitters distributed on two sides of the camera module;
the first control unit is electrically connected to the line laser emitters, and the second control unit is electrically connected to the camera module,
the first control unit controls the line laser emitters to emit line laser outwards, and the second control unit controls the camera module to collect an environmental image detected by the line laser, and is responsible for performing functional control on the autonomous mobile device according to the environmental image.

12. The device according to claim 11, wherein, the first control unit is further electrically connected to the camera module and the second control unit;
the second control unit performs exposure control on the camera module, and a synchronization signal generated by the camera module at each exposure is output to the first control unit;
the first control unit controls the line laser emitters to work alternately according to the synchronization signal, and outputs a laser source distinguishing signal to the second control unit;
the second control unit performs left-right marking on environmental images collected by the camera module at each exposure according to the laser source distinguishing signal.

13. The device according to claim 12, wherein, the structured light module is arranged on a front side of the device body, and the front side is a side to which the device body is oriented during the forward movement of the autonomous mobile device.

14. The device according to claim 13, wherein, a striking plate is further installed on the front side of the device body, the striking plate is located outside the structured light module, and windows are provided in a region on the striking plate corresponding to the structured light module so as to expose the camera module and the line laser emitters in the structured light module.

15. The device according to claim 14, wherein, windows are provided respectively in positions on the striking plate corresponding to the camera module and the line laser emitters.

16. The device according to claim 14, wherein, the structured light module is installed on an inside wall of the striking plate.

17. The device according to claim 13, wherein, the structured light module is arranged in a middle position, a top position or a bottom position in a height direction of the device body.

18. The device according to any one of claims 11 to 17, wherein, the autonomous mobile device is a floor sweeping robot or a window cleaning robot.

19. An autonomous mobile device, comprising: a device body, wherein, the device body is provided with a main controller, and a structured light module comprises: a camera module and line laser emitters distributed on two sides of the camera module;
and wherein, the main controller controls the line laser emitters to emit line laser outwards, controls the camera module to collect an environmental image detected by the line laser, and is responsible for performing functional control on the autonomous mobile device according to the environmental image.

20. The device according to claim 19, wherein, the main controller is specifically configured to:
perform exposure control on the camera module, and acquire a synchronization signal generated by the camera module at each exposure; and
control, according to the synchronization signal, the line laser emitters to work alternately, and perform left-right marking on environmental images collected by the camera module at each exposure.

21. The device according to claim 20, wherein, the structured light module is arranged on a front side of the device body, and the front side is a side to which the device body is oriented during the forward movement of the autonomous mobile device.

22. The device according to claim 21, wherein, a striking plate is further installed on the front side of the device body, the striking plate is located outside the structured light module, and windows are provided in a region on the striking plate corresponding to the structured light module so as to expose the camera module and the line laser emitters in the structured light module.
